# EUROPÄISCHE PATENTSCHRIFT

(11) **EP 2 158 146 B1**
(45) Veröffentlichungstag und Bekanntmachung des Hinweises auf die Patenterteilung: **16.03.2016**
(21) Anmeldenummer: 08773502.3
(22) Anmeldetag: 19.06.2008
(51) Int. Cl.: B65G 47/90, B65G 57/16

(54) **VORRICHTUNG UND VERFAHREN ZUM ÜBERGEBEN VON PRODUKTSTAPELN**
DEVICE AND METHOD FOR TRANSFERRING PRODUCT STACKS
DISPOSITIF ET PROCÉDÉ POUR LE TRANSFERT DE PILES DE PRODUITS

(30) Priorität: 26.06.2007 DE 102007029551
(43) Veröffentlichungstag der Anmeldung: 03.03.2010
(73) Patentinhaber: KUKA Roboter GmbH, 86165 Augsburg (DE)
(72) Erfinder: COTTONE, Norbert, 86441 Zusmarshausen (DE); PEGHINI, Martin, 86156 Augsburg (DE)
(74) Vertreter: Patentanwälte Funk & Böss GbR
(86) Internationale Anmeldenummer: PCT/EP2008/004912
(87) Internationale Veröffentlichungsnummer: WO 2009/000454

(56) Entgegenhaltungen:
- EP-A- 1 232 972
- DE-A1-102004 044 293

## Beschreibung

Die Erfindung betrifft eine Vorrichtung und ein Verfahren zum Übergeben von Produktstapeln.

Das Herstellen von Kunststoffbehältnissen, wie Bechern, Deckeln und Schalen erfolgt in der Regel im Maschinentakt in einem zweidimensionalen Muster oder einer Produktmatrix. Die bei einem Maschinentakt hergestellten Produkte können dann in Stapelschächte eingeschoben werden. Anschließend erfolgt die Herstellung der nächsten Produktreihe in einer Produktmatrix. Auch diese Produkte werden wieder in den Stapelschacht eingeschoben usw., bis diese gefüllt sind. Ein solcher Stapelschacht ist in der Regel ein sehr einfaches Stangenmagazin. Die Stapelbildung kann dabei entweder horizontal, schräg oder vertikal erfolgen. Über einen Aushebermechanismus oder eine Rakel werden die Stapel ausgetragen und einem Werker zur Weiterleitung übergeben. Im nächsten Arbeitsschritt werden die Produktstapel entweder direkt in einen Karton verpackt oder zuvor noch einer Einschweißmaschine zum Folieren der einzelnen Produktstapel zugeführt und anschließend in einen Karton verpackt.

Die Tätigkeit des Ein- und Umpackens der Produktstapel erfolgt heutzutage in der Regel händig. Werden die Produktstapel insbesondere bei horizontalen Stapelmagazinen, insbesondere mittels eines Rakels abgeschoben, kann es zum Auseinanderfallen der Produktstapel kommen, so dass ein Werker neben der Handhabung der Stapel diese zuvor noch richten muss. Dadurch, dass die Produktstapel händig ausgetragen und weiterverarbeitet bzw. eingepackt werden, ist die maximale Stapelhöhe begrenzt, da ansonsten die Gefahr besteht, dass ein solcher Produktstapel auseinanderbricht. Dasselbe Problem tritt auch bei vertikalen Stapelkäfigen auf. Hier werden die Stapel nach Erreichen einer bestimmten Stapelmenge über einen separaten Aushebermechanismus reihen- oder blockweise auf ein Förderband überführt. Auch hierbei ist die Gefahr groß, dass die Stapel auseinanderfallen. Das Förderband dient hierbei zusätzlich als Pufferspeicher. Nach dem Austragen der Stapel werden diese einer Verpackungsmaschine zugeführt, die die einzelnen Produktstapel mit einer Folie verschweißt. Die folierten Produktstapel werden dann ebenfalls manuell eingepackt.

Nachteilig ist daher insbesondere, dass die Weiterleitung und insbesondere die Verpackung derartiger Produktstapel nicht vollautomatisch erfolgen kann. Hierzu trägt auch bei, dass auf derartigen Formmaschinen eine Vielzahl unterschiedlicher Produkte herstellt werden, wozu jedes Mal die Form-, Stanz- und Austragwerkzeuge umzurüsten sind.

Es ist zwar schon bekannt, Produktstapel vertikal aus einem Stapelmagazin in eine starre Aufnahme in Form eines externen Stapelkäfigs oder Greifers rüberzuschieben (WO 2005/061353 A2, WO 2006/027053 A1), aber auch hiermit ist eine flexible vollautomatische Weiterverarbeitung von Produktstapeln im vorgenannten Sinne noch nicht möglich.

Die EP 1 232 972 A1 offenbart ein Handhabungsgerät für Gruppen von thermogeformten Gegenständen, das wenigstens einen Aufnahme- und Abgabekopf umfasst, der Aufnahmen aufweist, die sich parallel so zueinander erstrecken , wie die Stapel gehandhabt werden sollen. Das Handhabungsgerät weist des Weiteren einen Antrieb zum Bewegen des Aufnahme- und Abgabekopfs zwischen einer Aufnahmestation und eine Abgabestation auf. Der Aufnahme- und Abgabekopf weist außerdem einen Schieber zum Ausschieben der Stapel von thermogeformten Gegenständen auf. Insoweit offenbart dieser Stand der Technik eine Vorrichtung zum Übergeben von Produktstapeln, mit einer Abgabestation, einer Aufnahmestation und einer Übergabevorrichtung, die ein Verbindungselement zum Verbinden der Übergabevorrichtung mit einer Transporteinrichtung aufweist, wobei die Übergabevorrichtung mehrere Aufnahmebereiche für Produktstapel aufweist. Dies entspricht einem Verfahren zum Übergeben von Produktstapeln, bei dem die Produktstapel in der Übergabevorrichtung haltende Verschlusselemente zur Freigabe der Produktstapel entriegelt werden und die Produktstapel durch einen Schieber aus der Übergabevorrichtung ausgeschoben werden.

Der Erfindung liegt daher die Aufgabe zugrunde, eine vollautomatische Weiterleitung von Produktstapeln, insbesondere von tiefgezogenen Kunststoffprodukten, zu ermöglichen.

Erfindungsgemäß wird die genannte Aufgabe gelöst durch eine Vorrichtung der eingangs genannten Art mit einer Abgabestation, wie einer Tiefziehmaschine, einer Aufnahmestation, wie an einer Verpackungsmaschine und einer Übergabevorrichtung, die ein Verbindungselement zum Verbinden der Übergabevorrichtung mit einer Transporteinrichtung aufweist, wobei die Übergabevorrichtung mehrere Aufnahmebereiche für Produktstapel aufweist, die von Führungselementen begrenzt sind, die mit federbelasteten Verschlusselementen versehen sind, und die Übergabevorrichtung Platten aufweist, die in den Aufnahmebereichen entlang der Richtung der Führungselemente federbelastet auf die Verschlussglieder zu beweglich sind.

Die Verschlusselemente sind federbelastet gegen einen Anschlag in eine Schließstellung gedrückt, durch die ein Herausbewegen der Produktstapel aus der Übergabevorrichtung verhindert wird.

Gemäß einer bevorzugten Ausgestaltung der erfindungsgemäßen Übergabevorrichtung ist vorgesehen, dass die Führungselemente nahe den Symmetrieachsen der Aufnahmebereiche, insbesondere der auf den Symmetrieachsen angeordnet sind. Hierdurch ist es möglich die Übergabevorrichtung an einer Abgabestation kämmend in ein Stapelmagazin eingreifen zu lassen, bei dem die Führungsstangen üblicherweise in Eck- bzw. Kantenbereichen angeordnet sind.

Eine konkrete Weiterbildung sieht vor, dass die Platten mittels mit einer in einem Bodenbereich angeordneten Zugfeder verbundenen, über Umlenkrollen geführten Seilzügen federbelastet sind, wobei weiterhin die Platten Angriffselemente zum Angriff externer Ausschieber aufweisen und die Angriffselemente die äußere Kontur der Übergabevorrichtung überragen, wobei insbesondere den Verschlusselementen der Übergabevorrichtung Entriegelungselemente zugeordnet sind. Durch diese Ausgestaltungen kann an einer Aufnahme- oder Empfangsstation für die Produkte ein Ausschieben derselben unter Einwirkung der federbelasteten Platte und Freigabe der Verschlusselemente unterstützt werden. In Weiterbildung kann die erfindungsgemäße Übergabevorrichtung sie umgebende Seitenwände aufweisen.

Weiterhin sieht die Erfindung zur Lösung der genannten Aufgabe eine Übergabevorrichtung mit den beschriebenen Merkmalen sowie zum Aufnehmen von Produktstapeln aus einer Übergabevorrichtung vor, die gekennzeichnet ist durch den Verschlusselementen der Übergabevorrichtung zugeordnete Entriegelungselemte.

Schließlich ist zur Lösung der erfindungsgemäßen Aufgabe ein Verfahren vorgesehen, welches dadurch gekennzeichnet ist, dass elastisch vorgespannte, die Produktstapel in der Übergabevorrichtung haltende Verschlusselemente mittels an der Aufnahmestation vorgesehener Entriegelungsglieder zur Freigabe der Produktstapel entriegelt werden und dass die Produktstapel durch unter Federkraft stehende Platten aus der Übergabevorrichtung ausgeschoben werden.

Die unter Federkraft stehenden Platten sind hauptsächlich zum Sichern der Produktstapel beim Einfahren in die Übergabevorrichtung an der Tiefziehmaschine vorgesehen und unterstützen das Ausschieben der Produkte lediglich. Das Ausschieben erfolgt über externe Ausschieber.

In Weiterbildungen ist dabei vorgesehen, dass das Ausschieben durch Einwirken an mindestens eines an der Aufnahmestation vorgesehenen Ausschiebers unterstützt wird und insbesondere der mindestens eine Ausschieber an mit die Produktstapel ausschiebenden Platten verbundenen äußeren Angriffselementen angreift.

Die Übergabe der Produktstapel von der Übergabevorrichtung zur Weiterverarbeitung, wie beispielsweise zur Verpackung in einer Verpackungsstation, erfolgt an einer Aufnahmestation zum Aufnehmen der Produktstapel, die gekennzeichnet ist durch den Verschlusselementen der Übergabevorrichtung zugeordnete Entriegelungselemente. Bevorzugt kann mindestens ein den verschiebbaren Platten zugeordneter Ausschieber vorgesehen sein, wobei der mindestens eine Ausschieber an den Angriffselementen der Übergabevorrichtung angreift.

Die Vorrichtung mit einer Abgabevorrichtung, einer Aufnahmestation sowie einer in der vorstehend erfindungsgemäß ausgestalteten Übergabevorrichtung ist in bevorzugter Weise gekennzeichnet durch ein Handhabungsgerät, wie einen Roboter, zum Bewegen der Übergabevorrichtung zwischen der Abgabestation und der Aufnahmestation.

Durch die Erfindung, insbesondere die erfindungsgemäße Ausgestaltung der Übergabevorrichtung wird es möglich, Produktstapel nicht nur in vertikaler Ausrichtung, sondern in jeder Ausrichtung, d.h. auch horizontaler oder schräger Ausrichtung von der Herstellungsmaschine bzw. deren Abgabevorrichtung, beispielsweise in Form von Stapelmagazinen automatisch zu übernehmen und einer - automatischen - Weiterverarbeitung zuzuführen. Erfindungsgemäß kann nicht-kämmend oder kämmend gearbeitet werden, wobei im letztgenannten Fall ein zusätzlicher Ausschieber an der Abgabestation entfallen kann, wenn eine Kopplung zwischen der Übergabevorrichtung und einem Transportmechanismus, wie einem Roboter, aufrechterhalten wird.

Ein kämmendes Magazin bietet den Vorteil, dass es sehr einfach realisiert werden kann und auch kontinuierlich befüllt werden kann. Allerdings muss nach dem letzten Maschinentakt bzw. zwischen zwei aufeinanderfolgenden Maschinentakten der gesamte Produktstapel abgeholt werden. Hierzu kann - bei Abkopplung der Übergabevorrichtung von einem Roboter - nach dem Erreichen der geforderten Produktanzahl in einem Stapel eine Art Barriere oder Zwischenlage eingebracht werden, wodurch die Abgabe und das Entfernen des geschaffenen Produktstapels vom Maschinentakt getrennt werden kann. Bei einem nicht-kämmenden Stapelmagazin besteht bei der Übergabe des Stapelmagazins von diesem in die Übergabevorrichtung andererseits die Schwierigkeit, dass während eines einzigen Maschinentaktes der Stapel komplett zu übergeben ist und dies desto schneller geschehen muss, je höher der Stapel ist, womit auch die Anforderungen an den Überschieber erhöht sind.

Durch die Erfindung wird es möglich, unterschiedlichen Anforderungen der Produktion gerecht zu werden und diese zu erfüllen, insbesondere hinsichtlich Durchsatz und Leistung, Flexibilität und Ausfallsicherheit.

Weiterhin ist es im Rahmen der Erfindung möglich, zwischen Herstellungsmaschine und Weiterverarbeitung (Verpackung) eine Eins-zu-Eins-Zuordnung zu schaffen, insbesondere bei einer Herstellungsmaschine mit hohen Leistungen oder aber mehreren Herstellungsmaschinen lediglich einer Verpackungsmaschine zuzuordnen und dabei zur Bewegung eine erfindungsgemäße Übergabevorrichtung tragenden Handhabungsgeräts zwischen den einzelnen Herstellungsmaschinen und zur Weiterverarbeitungsmaschine hin eine Linearachse vorzusehen.

Insbesondere bei einer solchen Mehrmaschinenbeschickung kann vorgesehen sein, dass die Übergabevorrichtung von einem sie transportierenden Handhabungsgerät in der Herstellungsmaschine und/oder Weiterverarbeitungsmaschine/Verpackungsmaschine abgekoppelt wird und dort direkt als Stapelmagazin dient; alternativ kann sie neben oder über einem stationären Stapelmagazin abgelegt werden. Dies insbesondere in dem Fall, in dem von mehreren Herstellungsmaschinen unterschiedliche Produkte hergestellt werden, für die unterschiedliche Übergabevorrichtungen erforderlich sind. Derart kann ein Handhabungsgerät weitere Transportaufträge für die weiteren Herstellungsmaschinen übernehmen. Dabei können die Übergabevorrichtungen auch in ihrer Stapelhöhe unterschiedlich ausgebildet sein.

Wenn an der Weiterverarbeitungsmaschine eine Entleerung der Übergabevorrichtung schnell erfolgen kann, so kann diese an der Transporteinrichtung, wie dem Handhabungsgerät, angedockt bleiben und diese anschließend die Übergabevorrichtung wieder zu einer entsprechenden Herstellungsmaschine zurückbringen. Alternativ kann auch vorgesehen sein, dass das Handhabungsgerät die Übergabevorrichtung an der Weiterverarbeitungsmaschine trennt und während des Entleerens derselben eine dort befindliche schon geleerte Übergabevorrichtung aufnimmt und zu der zugehörigen Herstellungsmaschine zurückbringt und auch gegebenenfalls eine weitere vor der Übergabevorrichtung von dort oder aber einer anderen Herstellungsmaschine wieder zur Weiterverarbeitungsmaschine mitnimmt.

In bevorzugter Ausgestaltung kann dabei ein Handhabungsgerät bzw. ein Roboter der Vorrichtung mit zwei Kopplungsstellen für Übergabevorrichtungen ausgebildet sein.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind. Dabei zeigt:
- Fig. 1: eine perspektivische Darstellung einer Übergabegabevorrichtung von der Seite der Verschlussglieder derselben her gesehen;
- Fig. 2: eine perspektivische rückseitige (flanschseitige) Darstellung der Übergabevorrichtung;
- Fig. 3: eine vergrößerte Detaildarstellung der Übergabevorrichtung;

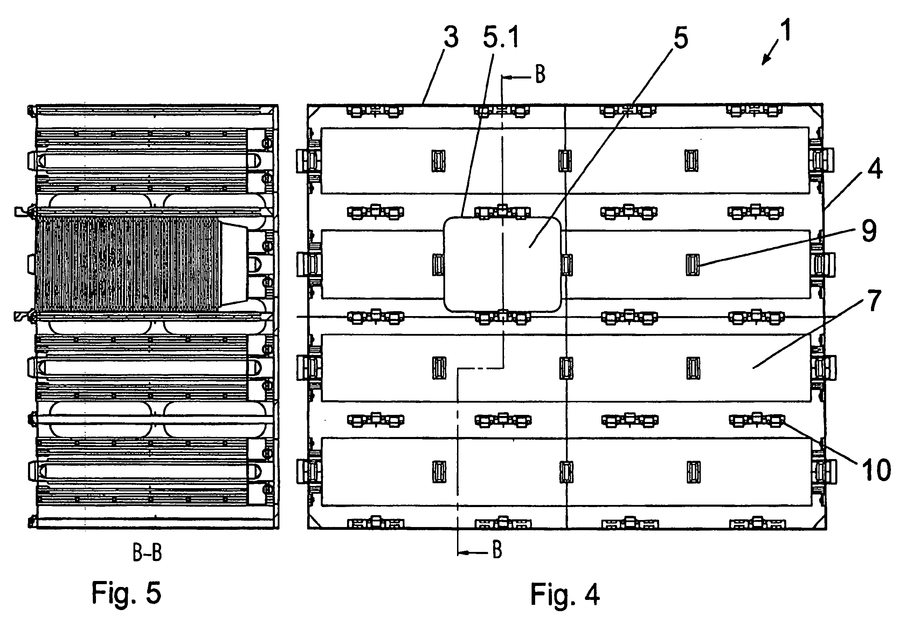

- Fig. 4: eine Draufsicht auf die Übergabevorrichtung von ihrer offenen Seite bzw. der Seite der Verschlusselemente her;
- Fig. 5: einen Schnitt entsprechend A-A der Fig. 4;
- Fig. 6: einen Längsschnitt durch eine Übergabevorrichtung;
- Fig. 7a: die Darstellung der Übernahme von Produktstapeln von einer Herstellungsmaschine, wie einer Tiefziehmaschine in nicht kämmender Weise mit einer Übergabevorrichtung;
- Fig. 7b: die Darstellung der Übernahme von Produktstapeln von einer Herstellungsmaschine, wie einer Tiefziehmaschine in kämmender Weise mit einer Übergabevorrichtung;
- Fig. 8a u. 8b: schematische Detailansichten eines stationären Stapelmagazins mit einschwenkbaren Barrieren zur Trennung eines durch die Übergabevorrichtung aufzunehmenden Produktstapels von weiteren in das Stapelmagazin eingestapelten Produkten;
- Fig. 9a u. 9b: einen Schnitt durch das Stapelmagazin der Fig. 8a und 8b;
- Fig. 10: die Darstellung einer horizontalen Übergabe von Produktstapeln aus der Übergabevorrichtung an eine Verpackungsmaschine;
- Fig. 11: eine Layout-Darstellung einer erfindungsgemäßen Vorrichtung zur Durchführung des Verfahrens bei hohen Leistungen der Tiefziehmaschinen; und
- Fig. 12: eine Layout-Darstellung einer erfindungsgemäßen Vorrichtung zur Durchführung des Verfahrens bei mittleren und niedrigen Leistungen der Tiefziehmaschinen.

Die Erfindung beinhaltet zunächst eine Übergabevorrichtung 1 zum Übergeben von Produktstapeln aus in einer Tiefziehmaschine hergestellter Produkte, wie Becherstapel oder dergleichen, d.h. zum Aufnehmen der Stapel aus der Tiefziehmaschine, zum Transport der Stapel zur Weiterverarbeitung, wie zur Verpackung und zur Abgabe der Stapel an eine Weiterverarbeitungsmaschine, wie eine Verpackungsmaschine, in der die einzelnen Stapel beispielsweise in Kunststofffolienschläuchen verpackt werden.

Die erfindungsgemäße Übergabevorrichtung 1 ist im dargestellten Ausführungsbeispiel kastenartig ausgebildet mit einem Boden 2 sowie Längs- und Querwänden 3, 4 als Seitenwänden, während die sechste, dem Boden gegenüberliegende Seite der Übergabevorrichtung 1 offen ist und über diese die Produktstapel 5 aufgenommen und abgegeben werden können.

Boden 2 und Seitenwände 3, 4 sind mit Durchbrechungen versehen.

In den Seitenwänden 4 finden sich Schlitze 4.1 in denen mit in der Übergabevorrichtung 1 in Erstreckungsrichtung der Führungselemente 8, 9 verschiebbare Platten 12 verbundene Angriffselemente 12.6 für externe Ausschieber geführt sind.

Auf der Außenseite des Bodens 2 ist eine Verbindungseinheit 6 in Form eines Werkzeugwechslers vorgesehen, mittels derer die erfindungsgemäße Übergabevorrichtung von einer Transporteinrichtung, wie einem Handhabungsgerät, den Roboter - über dessen Handflansch - aufgenommen bzw. abgekoppelt werden kann.

Im Inneren der erfindungsgemäßen Übergabeeinrichtung 1 finden sich mehrere Aufnahmebereiche, in der Ausgestaltung der Figuren sechzehn Aufnahmebereiche 7 für die Produktstapel 5, die durch stangenförmige Führungselemente 8, 9 begrenzt sind, wobei sich an den freien, dem Boden 2 abgewandten Enden der Führungselemente 8 und jeweils um eine Achse 10.1 schwenkbare Verschlusselemente 10 befinden, die federbelastet gegen einen Anschlag (nicht dargestellt) in ihrer in den Figuren dargestellten Schließstellung gedrückt werden, bei denen eine Nase 10.2 der Verschlusselemente 10 den Rand 5.1 des vordersten der den Produktstapel 5 bildenden Produkte untergreift.

Bei der dargestellten Ausführungsform sind auf einer Seite des Produktstapels 5 zwei derart ausgebildete Führungselemente 8 und auf der anderen Seite lediglich eins dem jeweiligen Produktstapel zugeordnet.

Die die Produktstapel an ihren anderen Seiten führenden Führungselemente 9 weisen, in dieser bevorzugten Ausgestaltung, keine derartigen die Produkte untergreifenden Verschlusselemente auf.

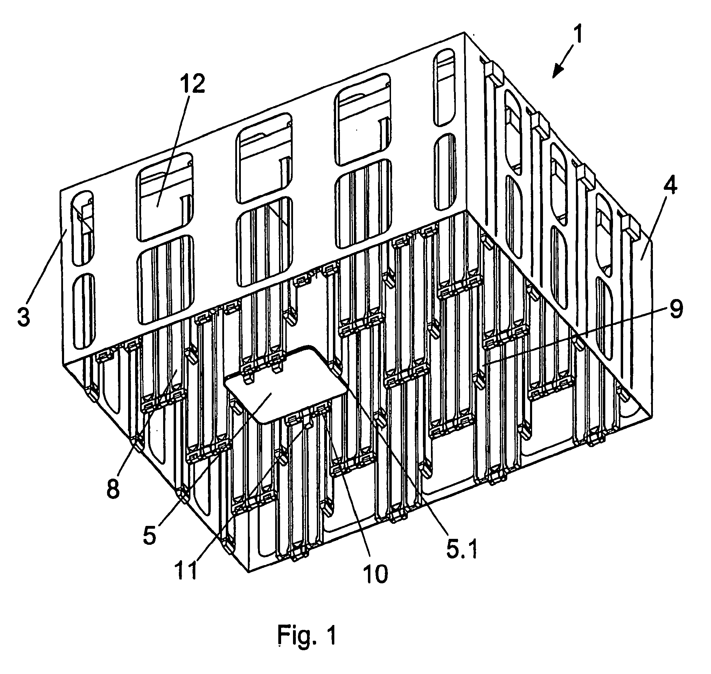

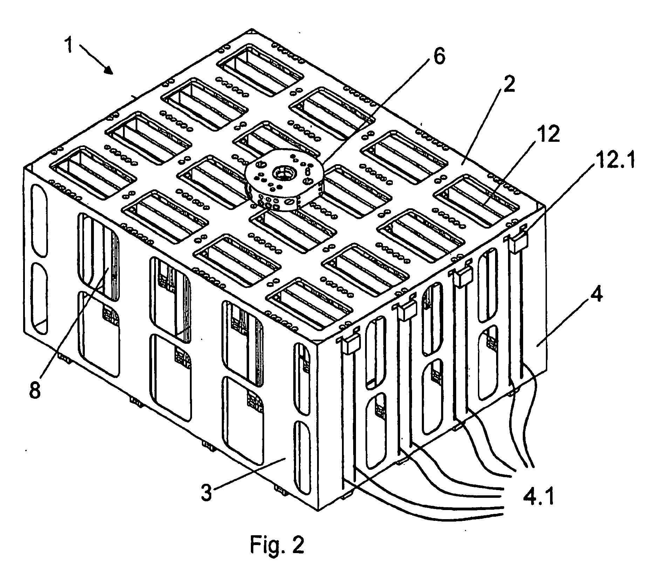

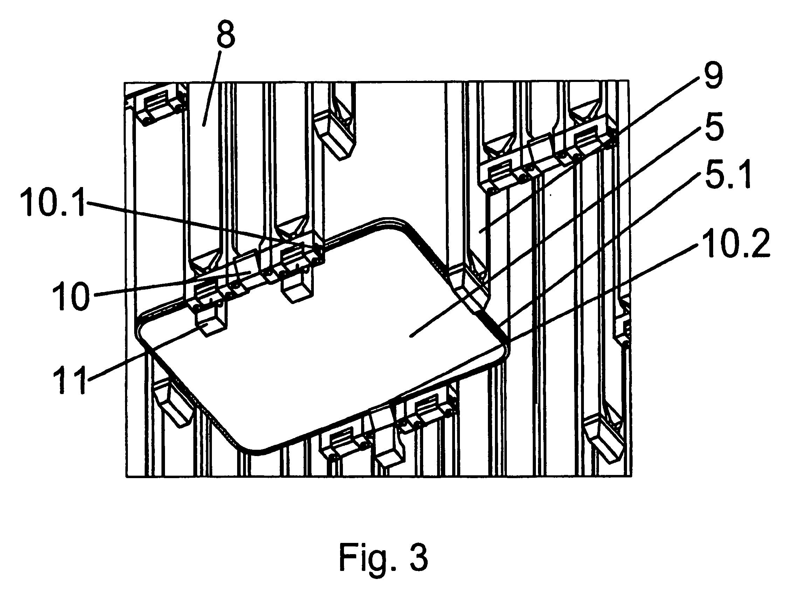

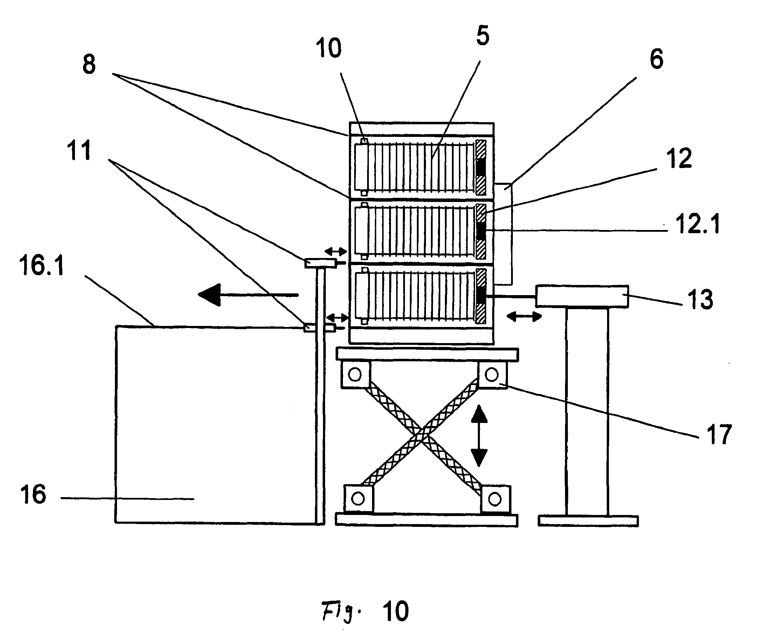

In den Zeichnungen, insbesondere in den Figuren 1, 3 sind weiterhin zur Veranschaulichung Entriegelungseinheiten 11 dargestellt, die allerdings nicht Teil der Übergabevorrichtung 1 selbst sind, sondern stationär an den Abgabestationen für die Produktstangen für die Produktstapel 5 angeordnet sind und dort zur Freigabe der Produktstapel 5 betätigbar sind. Sie drücken auf die Verschlusselemente 10, so dass diese in ihrer Achse 10.1 verschwenkt werden und derart die Nase 10.2 aus dem Randbereich 5.1 der Produkte des Produktstapels 5 zurückweicht und demgemäß die Produkte und den gesamten Produktstapel hierdurch freigibt, so dass er aus der Übergabeeinheit entfernt werden kann. Soweit die Ausrichtungen der Stapel 5 bzw. auch der Führungselemente 8, 9 eine vertikale Komponente (nach unten) hat, kann dies unter Schwerkraft erfolgen. Zusätzlich sind auf der Bodenseite der Produktstapel 5, insbesondere zunächst im Bereich des Bodens 2 verschiebbare Platten 12 vorgesehen, die in dieser in den Fig. 1 und 2 dargestellten Position ebenfalls vorzugsweise elastisch gehalten werden und mittels ebenfalls an der Aufnahmestation vorgesehenen - gegenüber der Übergabevorrichtung 1 - externen Ausschiebern 13 entlang der Führungselemente 8, 9 zu deren freien Ende hin verschoben werden können (Fig. 10), um so einerseits beim Abgeben der Produktstapel 5 aus den Übergabeeinrichtungen 1 die Produktstapel aktiv auszuschieben, andererseits bei der Aufnahme der Produkte in der Tiefziehmaschine als Niederhalter zu fungieren, um so dafür zu sorgen, dass die dort gebildeten Produktstapel nicht auseinander fallen bzw. das oberste Produkt sich nicht verdreht oder verkantet.

Erfindungswesentlich ist und ergibt sich aus dem Vorstehenden, dass die Übergabevorrichtung keine eigenen aktiven Einheiten aufweist oder benötigt, sondern selbst vollständig passiv ausgebildet ist. Bewegungen ihrer Elemente - Verschlusselemente 10, Platten 12 - werden ausschließlich durch externe Elemente oder aber durch Federkraft (Rückstellung in Ausgangsposition) bewirkt. Demgemäß sind keine aktiven elektrischen, pneumatischen oder hydraulischen Vorrichtungen an der Übergabevorrichtung selbst erforderlich und demgemäß bei der dargestellten und erläuterten Ausführungsform auch nicht vorhanden. Grundsätzlich wäre es aber möglich auch entsprechende aktive Elemente an der Obergabevorrichtung selbst vorzusehen.

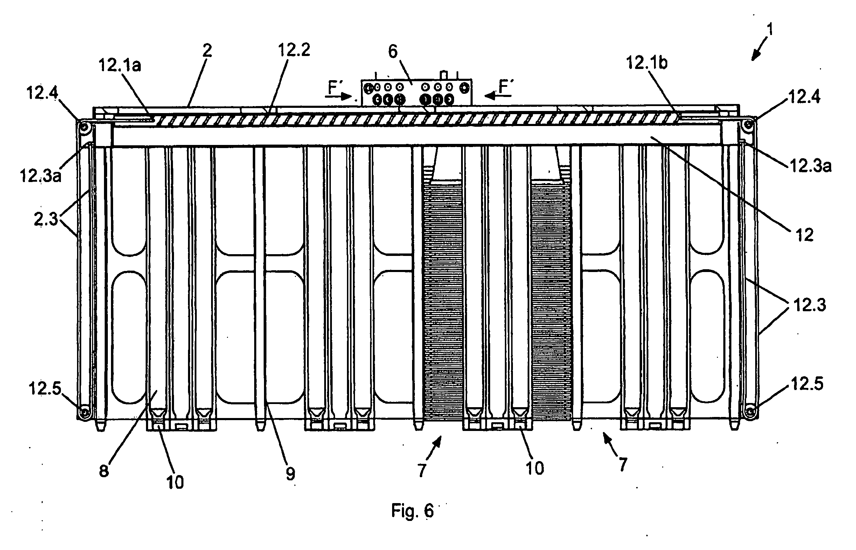

Die Fig. 6 zeigt einen Schnitt durch eine erfindungsgemäße Übergabevorrichtung 1. Es ist ersichtlich, dass zwischen dem äußeren Boden 2 und der beweglichen Platte 12, die als Niederhalter- und Ausschieberplatte dient, wobei jeweils eine solche einer Produktstapelreihe zugeordnet ist, jeweils eine Zugfeder 12.2 angeordnet ist, die in einem Rohr (nicht dargestellt) gekapselt sein kann. Die Enden 12.1a und 12.1b der Zugfeder 12.2 sind mit Seilzügen 12.3 verbunden, deren abgewandte Enden 12.3a an der beweglichen Platte 12 angreifen. Die Seilzüge 12.3 sind über Umlenkrollen 12.4 und 12.5 umgelenkt, wobei die erste Umlenkung um 90°, die zweite Umlenkung um 180° erfolgt.

Derart wird aufgrund der Zugwirkung der Feder 12.2 in Richtung der Pfeile F' auf die Platten 12 eine Zugwirkung in Richtung der Pfeile F ausgeübt, so dass diese, wenn sich in der Übergabevorrichtung 1 kein Produktstapel befindet in Richtung auf die freien Enden der Führungselemente 8, 9 bewegt werden und dort elastisch gehalten sind. Werden Produkte in die Aufnahmebereiche 7 eingeschoben, so wird die entsprechende Platte 12 entgegen der Wirkung der Zugfeder 12.2 zum Boden 2 hin zurückgedrückt. Aufgrund der einen eingeschobenen Produktstapel 5 zurückhaltende Verschlusselemente 10 wird die Platte 12 in einer der Höhe des Stapels 5 entsprechenden Position gehalten.

Werden die Verschlusselemente 10 nach Transport der Übergabevorrichtung 1 zu einer Abgabestation durch dort vorgesehene Entriegelungselemente entriegelt und geben damit den Produktstapel 5 frei, so kann dieser, insbesondere bei der in der Fig. 6 dargestellten vertikalen Ausbildung unter der Einwirkung der Feder 12.2 aus der Übergabevorrichtung 1 ausgeschoben werden. Ein solches Ausschieben kann, insbesondere wenn die Stapel 5 nicht vertikal, sondern geneigt oder horizontal angeordnet sind durch an den überragenden Nasen 12.1 der Platten 12 angreifende elektrisch oder pneumatisch betätigte Ausschieber unterstützt werden (Fig. 10).

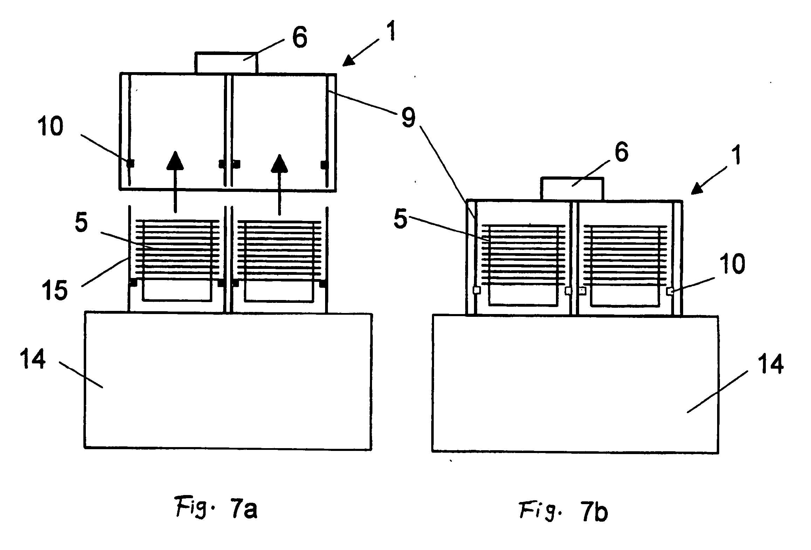

Die Fig. 7a und 7b zeigen schematisch zwei Möglichkeiten zur Aufnahme von Produktstapeln 5 in erfindungsgemäßen Übergabevorrichtungen 1. Hierbei ist 14 jeweils eine Herstellungsmaschine, wie eine Kunststofftiefziehmaschine, die beispielsweise tiefgezogene Kunststoffprodukte, wie Kunststoffbecher oder dergleichen herstellt, die als Stapel 5 in Stapelmagazinen 15 gestapelt werden.

Bei der Ausgestaltung der Fig. 7a wird die erfindungsgemäße Übergabevorrichtung 1 oberhalb des Stapelmagazins 15 angeordnet, beispielsweise dorthin durch einen an ihre Verbindungseinheit 6 angreifenden Roboter gebracht und nach Herstellung einer gewünschten Anzahl von Produkten in Produktstapeln 5 werden diese entsprechend den dargestellten Pfeilen durch nicht dargestellte Ausschieber aus den Stapelmagazinen 15 in die erfindungsgemäße Übergabevorrichtung 1 eingeschoben, wobei sie die elastisch schwenkbar gelagerten Verschlusselemente 10 beim Einschieben zur Seite drücken, bis diese dann den Rand des untersten Produkts des Produktstapels 5 untergreifen. Anschließend wird die Obergabevorrichtung 1 mit den aufgenommenen Produktstapeln 5 zu einer Weiterverarbeitungsstation (Fig. 10) transportiert.

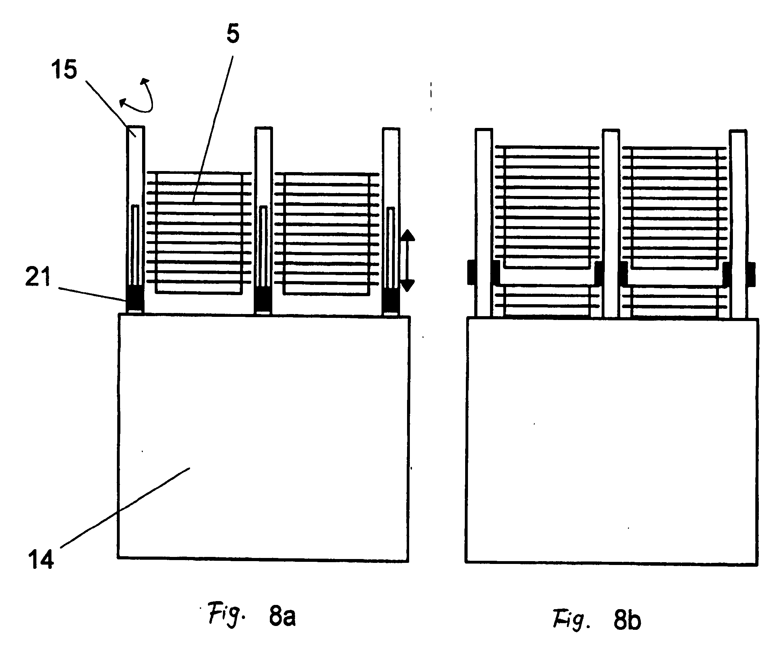

Bei der Ausgestaltung der Fig. 7b ist die erfindungsgemäße Übergabevorrichtung 1 kämmend in die an der Herstellungsmaschine 14 vorhandenen Stapelmagazine eingefahren. Beim Einschieben von jeweils gefertigten Produkten werden elastisch schwenkbar gelagerte Verschlusselemente 10 jeweils zur Seite verschwenkt bzw. gedrückt, bis sie wiederum den Rand des untersten Produkts des Produktstapels 5 untergreifen. Anschließend kann die Übergabevorrichtung 1 mit eingestapelten Produktstapeln 5 ebenfalls zur Weiterverarbeitung transportiert werden. Die Trennung eines geschaffenen auszutragenden Produktstapels 5 von weiter eingeschobenen Produkten wird im Folgenden anhand der Figuren 8a bis 9b beschrieben.

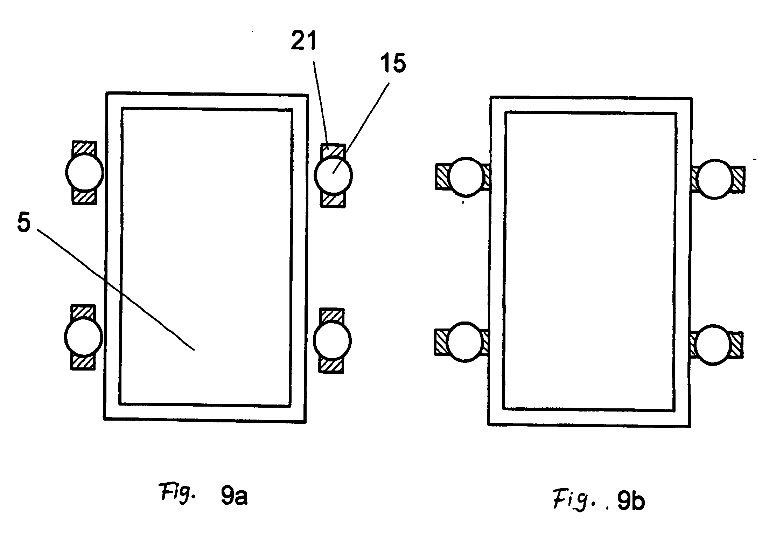

Die Fig. 8a und 8b zeigen in Seitenansicht und die Fig. 9a und 9b in Draufsicht eine Herstellungsmaschine mit einem auf diesen befindlichen stationären Stapelmagazinen 15, in welche die hergestellten Produkte eingeschoben und in denen derart Produktstapel gebildet werden. In den Führungsstangen der Stapelmagazine 15 sind Barrieren 21 geführt, mit denen ein vollständig gebildeter und auszutragender Produktstapel 5 von nachfolgend durch die Tiefziehmaschine 14 hergestellte Produkte, die einen weiteren Stapel bilden, getrennt werden kann. Die Barrieren 21 oder Abstandselemente sind über eine Gleitführung an oder in den Führungsstangen des Stapelmagazins 15 gelagert. Durch 90°-Drehung der Führungsstangen werden die Barrieren 21 bzw. Abstandselemente in den Bewegungsbereich der Produkte bzw. Produktstapel 5 eingebracht. In der Fig. 8a ist der Zeitpunkt gezeichnet, bei dem der Produktstapel 5 im Stapelmagazin die gewünschte Produktanzahl aufweist. Zu diesem Zeitpunkt werden die Barrieren 21 in den Bereich der Produkte bzw. der Produktstapel 5 eingeschwenkt, so dass die nachfolgend produzierten und im Stapelmagazin 15 eingeschobenen Produkte, wie gesagt, von dem geschaffenen Produktstapel 5 getrennt werden. Während die Freigabeposition, bei der der Produktstapel unbehindert gebildet wird in der Fig. 9a dargestellt ist, ist diese verschwenkte Position 9a der Barrieren 21 in der Fig. 9b dargestellt.

In der Fig. 8b ist die Situation nach drei weiteren Maschinentakten dargestellt, bei denen also jeweils drei weitere Produkte in das Stapelmagazin 15 eingeschoben wurden.

Die Barrieren 21 oder Abstandselemente selbst können im Fall eines vertikalen Stapelmagazins 15 schwerkraftbetätigt sein. Bei einer schrägen oder horizontalen Anordnung des Stapelmagazins sind die Barrieren 21 oder Abstandselemente über eine Feder (nicht gezeigt) vorgespannt. Die Feder selbst ist dann in der Führungsstange integriert.

Alternativ zu der dargestellten Ausführungsform, bei der die Barrieren in den Führungsstangen des Stapelmagazins geführt sind, könnte für die Barrieren auch ein separates weiteres Führungssystem vorgesehen sein.

Die Weiterverarbeitung beinhaltet beispielsweise ein Verpacken der einzelnen Produktstapel 5 in dieser aufnehmenden Kunststoffbeuteln oder schläuchen an einer Verpackungsmaschine 16. Hierzu wird die erfindungsgemäße übergabevorrichtung 1 zunächst beispielsweise seitlich, d.h. mit einer Seitenwandung 3 oder 4 auf einer Hubstation 17 abgelegt (Fig. 10), die auf eine solche Höhe verfahren wird, dass der in dieser horizontalen Stellung untere Bereich des Produktstapels 5 etwa auf Höhe einer Aufnahmefläche 16.1 der Verpackungsstation 16 angeordnet ist. Gegen die Verschlusselemente 10 verfahren die an der Verpackungsstation 16 vorgesehenen, schon oben erwähnten Entriegelungselemente 11, so dass die Verschlusselemente 10 die Ränder der Produkte des entsprechenden Produktstapels 5 freigeben, so dass dieser durch eine auf die sich am Boden 2 der Obergabevorrichtung 1 befindlichen Platten wirkenden externen Ausschieber, der sich an der Aufnahmeplatte 16.1 befindet, in die Verpackungsstation 16 bzw. auf die Aufnahmeplatte 16.1 derselben ausgeschoben werden können. Die Ausschieber 16.2 greifen dabei an den oben beschriebenen die Kontur der Übergabevorrichtung 1 überragenden an den Platten 12 angeordneten Angriffselementen 12.6 an.

Anschließend wird im in der Fig. 10 dargestellten Ausführungsbeispiel die Hubstation 17 abgesenkt, bis der dort dargestellte mittlere Stapel 5 auf die Höhe der Aufnahmefläche 16.1 gelangt und in gleicher Weise dieser Stapel und schließlich der oberste Stapel nach weiterem Absenken der Hubstation 17 ausgeschoben.

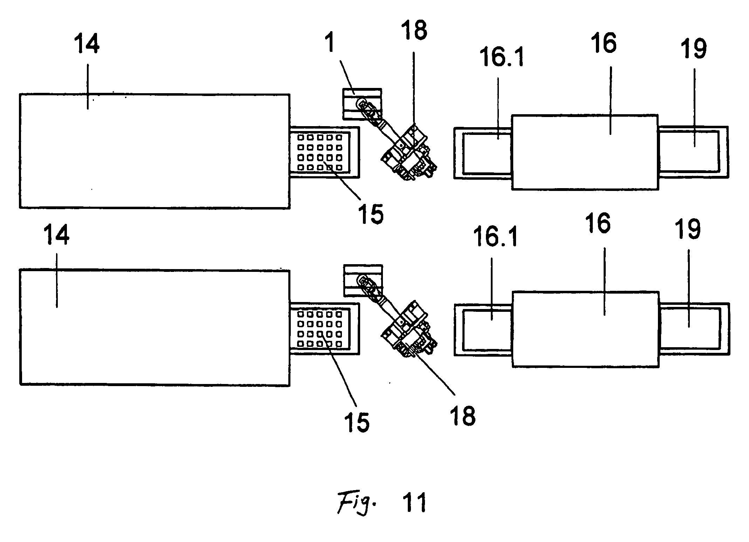

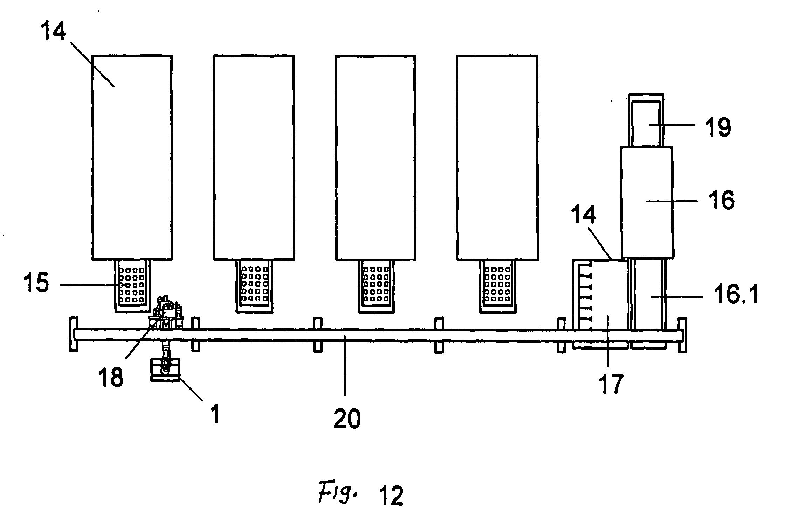

Die Fig. 11 und 12 zeigen Gesamtlayouts zur Durchführung des erfindungsgemäßen Verfahrens. Bei der Ausgestaltung der Fig. 11 sind zwei vollständige Produktlinien nebeneinander angeordnet. Jede Produktlinie besteht aus einer Herstellungsmaschine, wie einer Tiefziehmaschine 14 mit jeweils einem Stapelmagazin 15, einem Roboter 18, der eine Obergabevorrichtung 1 trägt und einer Verpackungsmaschine 16 zur Aufnahme der Obergabevorrichtungen 1 und einer Abgabestation 19 zur Abgabe der verpackten Produktstapel 5. Wenn die Übergabevorrichtung 1 ständig am Roboter 18 gekoppelt ist, ist eine separate Hubstation (Fig. 10) nicht erforderlich. Die Hubbewegung erfolgt durch den Roboter 18. Ein externer Ausschieber 16.2 (nicht dargestellt) ist weiterhin erforderlich.

Eine solche Anordnung, bei der jeder Herstellungsmaschine eine Verpackungsmaschine zugeordnet ist, ist für Herstellungsmaschinen (Tiefziehmaschinen) hoher Leistung sinnvoll. Haben die Herstellungsmaschinen bzw. Tiefziehmaschinen 14 keine hohe Leistung, so ist es auch möglich mehrere Tiefziehmaschinen 14 einer Verpackungsmaschine 16 zuzuordnen, wie dies in der Fig. 8 dargestellt ist, wo einer Verpackungsmaschine 16 vier Tiefziehmaschinen zugeordnet sind. Hier ist entlang der Stapelmagazine 15 der nebeneinander angeordneten Tiefziehmaschinen 14 eine Linearachse 20 vorgesehen, entlang derer ein Handhabungsgerät, wie eben ein Roboter 18 verfahrbar ist, der Übergabevorrichtungen zwischen den Tiefziehmaschinen 14 und der Verpackungsmaschine 12 hin und herbewegt, wobei gegebenenfalls - nicht dargestellt - auch eine Zwischenablage im Bereich der Verpackungsmaschine 16 vorhanden sein kann, so dass der Roboter 18 schon eine weitere mit Produktstapeln 5 gefüllte Übergabevorrichtung 1 holen kann, während eine vorher abgelegte Übergabevorrichtung 1 an der Verpackungsmaschine entleert wird, die der Roboter dann zur Aufnahme weiterer Produktstapel an einer der Tiefziehmaschinen 14 wieder aufnehmen kann.

## Patentansprüche

1. Vorrichtung zum Übergeben von Produktstapeln, mit einer Abgabestation (19), einer Aufnahmestation und einer Übergabevorrichtung (1), die ein Verbindungselement (6) zum Verbinden der Übergabevorrichtung (1) mit einer Transporteinrichtung aufweist, wobei die Übergabevorrichtung (1) mehrere Aufnahmebereiche (7) für Produktstapel (5) aufweist, die von Führungselementen (8, 9) begrenzt sind, die mit federbelasteten Verschlusselementen (10) versehen sind, und die Übergabevorrichtung (1) Platten (12) aufweist, die in den Aufnahmebereichen (7) entlang der Richtung der Führungselemente (8, 9) federbelastet auf die Verschlusselemente (10) zu beweglich sind.

2. Vorrichtung nach Anspruch 1, **gekennzeichnet durch** ein Handhabungsgerät, wie einen Roboter (18), zum Bewegen der Übergabevorrichtung (1) zwischen der Abgabestation (19) und der Aufnahmestation.

3. Vorrichtung nach einem der Ansprüche 1 oder 2, **dadurch gekennzeichnet, dass** die Aufnahmestation zum Aufnehmen der Produktstapel (5) aus der Übergabevorrichtung (1) den Verschlusselementen (10) der Übergabevorrichtung (1) zugeordnete Entriegelungselemente aufweist.

4. Vorrichtung nach Anspruch 3, **gekennzeichnet durch** mindestens einen den verschiebbaren Platten zugeordneten Ausschieber, der insbesondere pneumatisch oder elektrisch angetrieben ist.

5. Vorrichtung nach Anspruch 4, **dadurch gekennzeichnet, dass** der mindestens eine Ausschieber ausgebildet ist, an Angriffselementen (12.1) der Übergabevorrichtung (1) anzugreifen.

6. Vorrichtung nach einem der Ansprüche 1 bis 5, **dadurch gekennzeichnet, dass** die Führungselemente (8, 9) nahe den Symmetrieachsen der Aufnahmebereiche (7), insbesondere auf den Symmetrieachsen angeordnet sind.

7. Vorrichtung nach einem der Ansprüche 1 bis 5, **dadurch gekennzeichnet, dass** die Platten (12) mittels mit einer in einem Bodenbereich angeordneten Zugfeder (12.2) verbundenen, über Umlenkrollen geführten Seilzügen (12.3) federbelastet sind.

8. Vorrichtung nach einem der Ansprüche 1 bis 7, **dadurch gekennzeichnet, dass** die Platten (12) mit Angriffselementen (12.1) zum Angriff externer Ausschieber versehen sind.

9. Vorrichtung nach Anspruch 8, **dadurch gekennzeichnet, dass** die Angriffselemente (12.1) die äußere Kontur von Seitenwänden (4) der Übergabevorrichtung (1) überragen, insbesondere dass die Angriffselemente (12.1) in Schlitzen (4.1) von Seitenwänden (4) der Übergabevorrichtung (1) entlang der Führungselemente (9) geführt sind.

10. Übergabevorrichtung (1) zum Übergeben von Produktstapeln (5), mit einem Verbindungselement (6) zum Verbinden der Vorrichtung (1) mit einer Transporteinrichtung, mit mehreren von mit federbelasteten Verschlusselementen (10) versehenen Führungselementen (8,9) begrenzten Aufnahmebereichen (7) für Produktstapel (5) und mit in den Aufnahmebereichen (7) entlang der Richtung der Führungselemente (8, 9) federbelastet auf die Verschlusselemente (10) zu beweglichen Platten (12).

11. Aufnahmestation zum Aufnehmen von Produktstapel (5) aus einer Übergabevorrichtung (1) nach Anspruch 10, **gekennzeichnet durch** den Verschlusselementen (10) der Übergabevorrichtung (1) zugeordnete Entriegelungselemente.

12. Verfahren zum Übergeben von Produktstapeln aus einer Übergabevorrichtung (1) an eine Aufnahmestation, wobei elastisch vorgespannte, die Produktstapel (5) in der Übergabevorrichtung (1) haltende Verschlusselemente (10) mittels an der Aufnahmestation vorgesehener Entriegelungsglieder (11) zur Freigabe der Produktstapel (5) entriegelt werden und dass die Produktstapel (5) durch unter Federkraft stehende Platten (12) aus der Übergabevorrichtung (1) ausgeschoben werden.

13. Verfahren nach Anspruch 12, **dadurch gekennzeichnet, dass** das Ausschieben durch Einwirken an mindestens eines an der Aufnahmestation vorgesehenen Ausschiebers unterstützt wird, der insbesondere an mit die Produktstapel ausschiebenden Platten verbundenen äußeren Angriffselementen (12.1) angreift.

## Claims

1. Device for transferring product stacks comprising a delivery station (19), a receiving station and a transfer device (1), which comprises a connecting element (6) for connecting the transfer device (1) to a transport device, wherein the transfer device (1) comprises a plurality of receiving areas (7) for product stacks (5) which are delimited by guiding elements (8, 9) provided with spring-loaded closing elements (10) and the transfer device (1) comprises plates (12) which are to be moved into the receiving areas (7) spring-loaded towards the closing elements (10) along the direction of the guiding elements (8, 9).

2. Device according to claim 1, **characterised by** a handling device, such as a robot (18), for moving the transfer device (1) between the delivery station (19) and the receiving station.

3. Device according to either claim 1 or claim 2, **characterised in that** the receiving station for receiving the product stack (5) from the transfer device (1) comprises unlocking elements assigned to the closing elements (10) of the transfer device (1).

4. Device according to claim 3, **characterised by** at least one extender assigned to the displaceable plates, which is driven in particular pneumatically or electrically.

5. Device according to claim 4, **characterised in that** the at least one extender is designed to engage with engaging elements (12.1) of the transfer device (1).

6. Device according to any one of claims 1 to 5, **characterised in that** the guiding elements (8, 9) are arranged close to the axes of symmetry of the receiving areas (7), in particular on the axes of symmetry.

7. Device according to any one of claims 1 to 5, **characterised in that** the plates (12) are spring-loaded by means of cable pulls (12.3) guided over pulleys and connected to a tension spring (12.1) arranged in a base area.

8. Device according to any one of claims 1 to 7, **characterised in that** the plates (12) are provided with engaging elements (12.1) for engaging external extenders.

9. Device according to claim 8, **characterised in that** the engaging elements (12.1) project over the outer contour of side walls (4) of the transfer device (1), in particular **in that** the engaging elements (12.1) are guided into slots (4.1) of side walls (4) of the transfer device (1) along the guiding elements (9).

10. Transfer device (1) for transferring product stacks (5) comprising a connecting element (6) for connecting the device (1) to a transport device, with a plurality of receiving areas (7) for product stacks (5) delimited by guiding elements (8, 9) provided with spring-loaded closing elements (10) and with plates (12) to be moved into the receiving areas (7) spring-loaded towards the closing elements (10) along the direction of the guiding elements (8, 9)

11. Receiving station for receiving product stacks (5) from a transfer device (1) according to claim 10, **characterised by** unlocking elements assigned to the closing elements (10) of the transfer device (1).

12. Method for transferring product stacks from a transfer device (1) to a receiving station, wherein elastically pretensioned closing elements (10) holding the product stacks (5) in the transfer device (1) are unlocked by means of unlocking members (11) provided at the receiving station for releasing the product stack (5) and in that the product stacks (5) are pushed out of the transfer device (1) by plates (12) that are under spring force.

13. Method according to claim 12, **characterised in that** the pushing out is supported by the action on at least one extender provided at the receiving station which engages in particular with outer engaging elements (12.1) connected to plates pushing out the product stacks.

## Revendications

1. Dispositif de transfert de piles de produits, comportant une station de distribution (19), une station de réception et un dispositif de transfert (1) qui présente un élément de liaison (6) pour relier le dispositif de transfert (1) à un dispositif de transport, le dispositif de transfert (1) présentant plusieurs zones de réception (7) pour des piles de produits (5) qui sont limitées par des éléments de guidage (8, 9) qui sont pourvus d'éléments de fermeture (10) sollicités par ressort, et le dispositif de transfert (1) présentant des plaques (12) qui, dans les zones de réception (7), sont mobiles le long de la direction des éléments de guidage (8, 9) en étant sollicités par ressort vers les éléments de fermeture (10).

2. Dispositif selon la revendication 1, **caractérisé par** un appareil de manutention tel qu'un robot (18) destiné à déplacer le dispositif de transfert (1) entre la station de distribution (19) et la station de réception.

3. Dispositif selon l'une des revendications 1 ou 2, **caractérisé en ce que** la station de réception pour la réception des piles de produits (5) depuis le dispositif de transfert (1) présente des éléments de déverrouillage associés aux éléments de fermeture (10) du dispositif de transfert (1).

4. Dispositif selon la revendication 3, **caractérisé par** au moins un poussoir associé aux plaques déplaçables, dont l'entraînement est en particulier pneumatique ou électrique.

5. Dispositif selon la revendication 4, **caractérisé en ce que** ledit au moins un poussoir est réalisé pour attaquer des éléments d'attaque (12.1) du dispositif de transfert (1).

6. Dispositif selon l'une des revendications 1 à 5, **caractérisé en ce que** les éléments de guidage (8, 9) sont agencés à proximité des axes de symétrie des zones de réception (7), en particulier sur les axes de symétrie.

7. Dispositif selon l'une des revendications 1 à 5, **caractérisé en ce que** les plaques (12) sont sollicitées par ressort au moyen de câbles (12.3) guidés par des galets de renvoi reliés à un ressort de traction (12.2) agencé dans la zone de fond.

8. Dispositif selon l'une des revendications 1 à 7, **caractérisé en ce que** les plaques (12) sont pourvues d'éléments d'attaque (12.1) pour l'attaque de poussoirs externes.

9. Dispositif selon la revendication 8, **caractérisé en ce que** les éléments d'attaque (12.1) dépassent le contour extérieur de parois latérales (4) du dispositif de transfert (1), en particulier **en ce que** les éléments d'attaque (12.1) sont guidés dans des fentes (4.1) de parois latérales (4) du dispositif de transfert (1) le long des éléments de guidage (9).

10. Dispositif de transfert (1) pour le transfert de piles de produits (5), comportant un élément de liaison (6) pour relier le dispositif (1) à un dispositif de transport, comportant plusieurs zones de réception (7) pour piles de produits (5), limitées par des éléments de guidage (8, 9) pourvus d'éléments de fermeture (10) sollicités par ressort, et comportant des plaques (12) mobiles le long de la direction des éléments de guidage (8, 9) en étant sollicités par ressort vers les éléments de fermeture (10).

11. Station de réception pour la réception de piles de produits (5) depuis un dispositif de transfert (1) selon la revendication 10, **caractérisée par** des éléments de déverrouillage associés aux éléments de fermeture (10) du dispositif de transfert (1).

12. Procédé pour le transfert de piles de produits depuis un dispositif de transfert (1) jusqu'à une station de réception, des éléments de fermeture (10) élastiquement précontraints, qui retiennent les piles de produits (5) dans le dispositif de transfert (1), étant déverrouillés au moyen d'éléments de déverrouillage (11) pour libérer les piles de produits (5) et en ce que les piles de produits (5) sont poussées hors du dispositif de transfert (1) par des plaques (12) sous une force de ressort.

13. Procédé selon la revendication 12, **caractérisé en ce que** la poussée est soutenue par une action exercée sur au moins un poussoir prévu sur la station de réception, lequel attaque en particulier des éléments d'attaque (12.1) extérieurs reliés à des plaques poussant les piles de produits.
